# EUROPEAN PATENT APPLICATION

(11) **EP 4 317 033 A1**
(43) Date of publication of application: **07.02.2024**
(21) Application number: 22188002.4
(22) Date of filing: 01.08.2022
(51) Int. Cl.: B65G 43/02, B65G 47/86

(54) **MONITORING SYSTEM FOR MONITORING THE WEAR OF A GRIPPER FOR RETAINING A CONTAINER, CONVEYOR COMPRISING SAID MONITORING SYSTEM AND PACKAGING PLANT COMPRISING SAID MONITORING SYSTEM**

(71) Applicant: SIDEL PARTICIPATIONS, 76930 Octeville-sur-Mer (FR)
(72) Inventor: CASONI, Alessio, 43126 Parma (IT); BERTOZZI, Stefano, 43126 Parma (IT)
(74) Representative: Sidel Group

(57) **Abstract**

A monitoring system (1) for monitoring the wear of a gripper (2) for retaining a container; the gripper (2) comprises two jaws (3; 3A, 3B) at least one of which is mobile on a plane (P) to arrange the gripper between an open position within which the jaws (3; 3A, 3B) of the gripper (2) are spaced apart from one another for receiving or releasing the container, and a closed position within which the jaws (3; 3A, 3B) of the gripper (2) are approached to one another for retaining the container; the monitoring system (1) comprises a sensing unit (4) configured to detect a displacement of the first jaw (3; 3A) with respect to the second jaw (3; 3B) along a direction (D) which is transversal, preferentially orthogonal, to the plane (P).

## Description

### TECHNICAL FIELD

The present invention relates to a monitoring system for monitoring the wear of a gripper for retaining a container, a conveyor comprising said monitoring system and a packaging plant comprising said monitoring system.

Preferably, the present invention finds advantageous (but not exclusive) application in the field of automatic machines in the technical field of the food industry, in particular of pourable food products.

More preferably, the present invention finds advantageous (but not exclusive) application in packaging plants wherein the conveyed container is a bottle.

### BACKGROUND

Typically, packaging plants comprise a plurality of automatic machines each of which defines a respective processing station. For example in the food industry wherein pourable products are filled into containers (like bottles), the packaging plant can comprise at least one between: a blowing station comprising a blowing machine in which the container is made, a filling machine configured to fill the container with a pourable product, a labelling machine configured to label each container and a capping machine configured to close each filled container.

Each of these automatic machines is provided with at least one conveyor (for example a star wheel), which retains and transports the containers. The known conveyors comprise usually a plurality of grippers arranged in correspondence of the path of the conveyor itself.

The known grippers comprise two jaws which are mobile on a plane between an open position, within which jaws of the gripper are spaced apart from one another for receiving or releasing the container, and a closed position, within which jaws of the gripper are approached to one another for stably retaining the container.

The movement of each jaw is achieved by an actuating unit. Operation of the actuating unit may result in jaws of the grippers being subjected to respective overturning moments.

With the passage of time, by dint of positioning themselves repeatedly from the open position to the closed position, and vice versa and by continuously being subjected to this overturning moment, the grippers may wear out. The wear of the grippers may lead to a no longer stable and appropriate retaining (for example with the correct orientation) of the containers by the respective gripper themselves. This may challenge the overall packaging process. As a result, for example labels may be applied in a less desired manner or caps may be applied off-center. It follows therefore that also a relatively low degree of wear can in any case lead to an increase of discarded containers and therefore to a reduction of the machine or even plant productivity.

In addition, if the wear exceeds a certain degree of acceptance, the grippers are no longer able to hold the containers.

In particular, the movement of each jaw can be obtained by interaction of a cam follower which is integral with the gripper, with a cam which is fixed with respect to the frame supporting the conveyor. The positioning of the cam follower within the gripper is such that the cyclical interaction between the cam follower and the cam generates a twisting moment on the jaws, which can increase the wear.

### SUMMARY OF THE INVENTION

The object of the present invention is to provide a monitoring system for monitoring the wear of a gripper for retaining a container, a conveyor comprising said monitoring system and a packaging plant comprising said monitoring system, which are easy and cost-effective to produce.

In accordance with the present invention, a monitoring system for monitoring the wear of a gripper for retaining a container is provided, according to what claimed in the attached claims.

In accordance with the present invention, also a conveyor comprising said monitoring system and a packaging plant comprising said monitoring system are provided, according to what claimed in the attached claims.

The claims describe embodiments of the present invention forming integral part of the present description.

### BRIEF DESCRIPTION OF THE DRAWINGS

The present invention will now be described with reference to the accompanying drawings, which show a non-limitative embodiment thereof, in which:
- Figure 1 is a schematic and prospective view (with parts removed for clarity) of a conveyor provided with a monitoring system according to the present invention; and
- Figure 2 is an enlarged view of a portion of figure 1;
- Figure 3 is a plan view of the conveyor of Figure 1, in case the conveyor comprises a plurality of grippers.

### DETAILED DESCRIPTION OF EXEMPLARY EMBODIMENTS

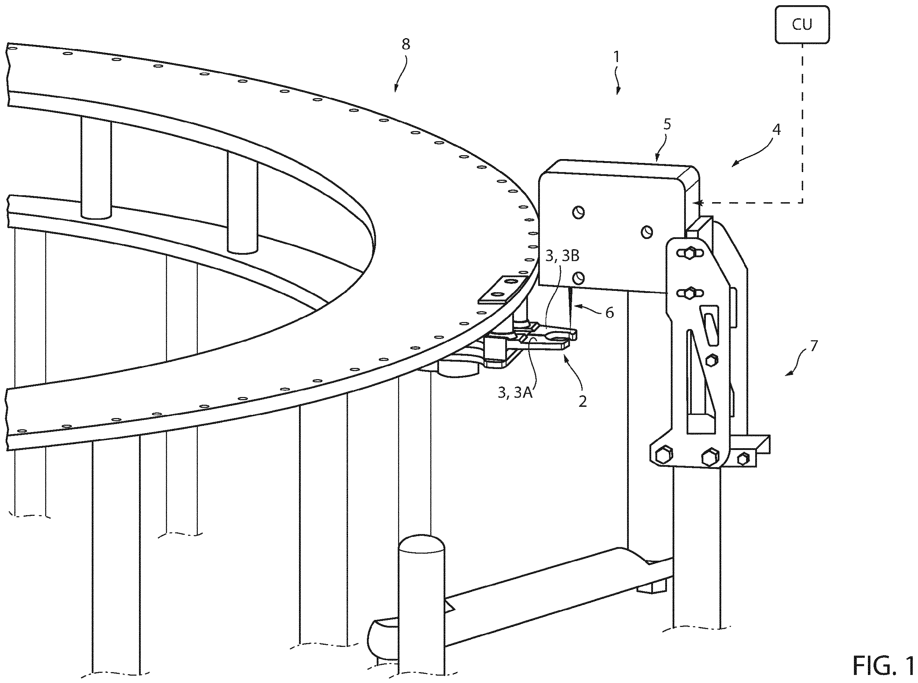

In Figure 1, reference number 1 indicates a monitoring system for monitoring the wear of a gripper 2 for retaining a container (not illustrated).

With the term "wear" is intended the damage, gradual removal or deformation of at least a part of the gripper 2.

Advantageously, but not limitedly, the container could be made of a material chosen among (not exhaustive and not a limitative list): plastic, metal or glass.

According to a not-limitative example, the container could be a bottle or a can.

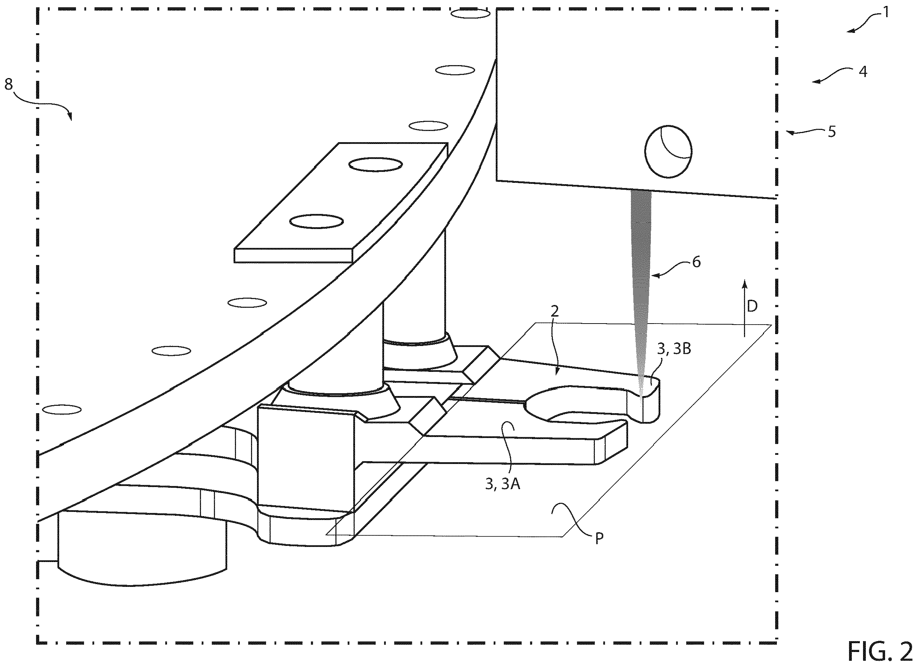

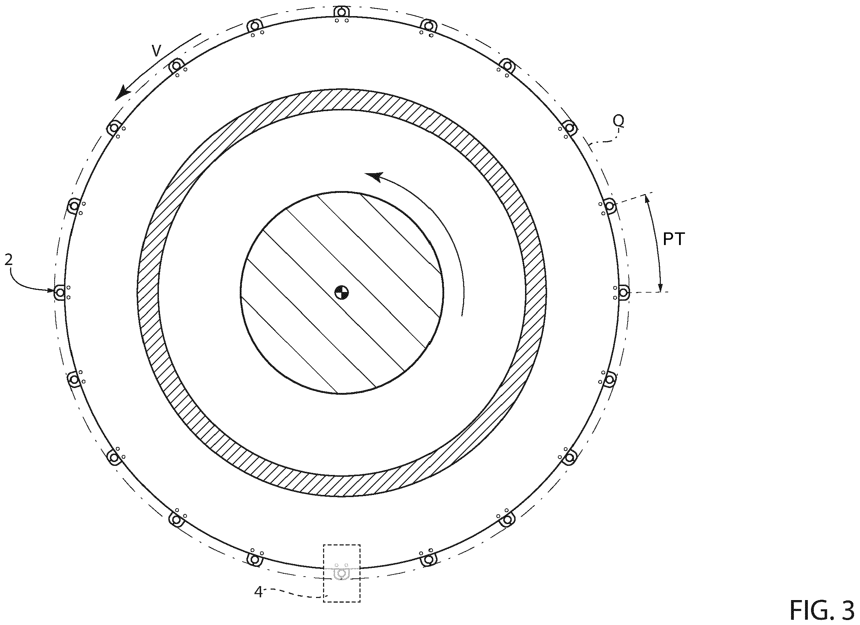

The gripper 2 comprises two jaws 3 (i.e. jaw 3A and jaw 3B as illustrated in the attached figures), at least one of which is mobile on a plane (indicated schematically in figure 2) to arrange or switch the gripper 2 between an open position (not illustrated) within which jaws 3A and 3B of the gripper 2 are spaced apart from one another for receiving or releasing the container, and a closed position (illustrated in figures 1 and 2) within which jaws 3A and 3B of the gripper 2 are approached to one another for retaining (i.e. clamping) the container. The plane is indicated with P in Figure 2 and can be considered parallel with respect to the plane of Figure 3.

The movement from the open position to the closed position and vice versa, of each or at least one jaw 3A and 3B, is achieved by an actuating unit. The actuating unit (not illustrated) is of known -not limitative- type. This actuating unit can work by means of a cam follower which is a part of the gripper 2 and a cam.

According to the present invention, at least one jaw 3A or 3B is mobile on the plane P. That means that according to the invention, both jaws 3A and 3B can be mobile on the plane P or alternatively one jaw between jaws 3A and 3B of the gripper 2 is fixed, while the other jaw between jaws 3A and 3B of the same gripper 2 is mobile relative to the fixed jaw.

The monitoring system 1 comprises a sensing unit 4 configured to detect a displacement or misalignment of jaw 3A with respect to the other jaw 3B along a direction D, which is transversal, preferentially orthogonal, to the plane P. In particular, in the illustrated embodiment of figures 1 and 2, the direction D extends vertically while the plane P is horizontal. The displacement or misalignment is therefore a vertical displacement or misalignment. The jaws 3a and 3b move and/or rotate horizontally, with respect to each other, to switch between the closed position and the open position.

Advantageously, but not limitedly, the sensing unit 4 comprises a sensor 5, which could be a distance sensor for detecting the relative displacement along the direction D of each jaw 3A or 3B.

The sensor 5 is preferably configured to detect the distance along the direction D between the distance sensor itself and each jaw 3A and 3B; while, therefore, the sensor 5 is configured to detect the relative vertical displacement along the direction D of each jaw 3A and 3B. In other words, the sensor 5 enables to determine the vertical displacement or misalignment between the two jaws 3A and 3B of the gripper 2. On the contrary, through the detected distances of each jaw 3A and 3B by the distance sensor the relative vertical displacement between the two jaws 3A and 3B can be obtained (i.e. calculated or derived), for example by comparing them with the aid of a control unit CU of the monitoring system 1, which is operatively connected (by wire or wirelessly) with the monitoring system 1.

According the not limitative embodiment of figures 1 and 2, the distance sensor 5 comprises a laser sensor configured to emit a laser beam 6 onto each jaw 3A and 3B to detect their relative displacement or misalignment along the direction D. In other words, the laser beam 6 impacts on a respective a surface of jaw 3A and/or jaw 3B facing the position sensor.

According the attached figures the laser beam 6 acts (i.e. impacts) on jaw 3A and/or 3B from above (transversally or orthogonally on the plane P). In other words, the laser beam 6 impacts on the upper surface of the jaws.

According to an alternative and not limiting embodiment, which is not illustrated, the laser beam 6 acts (i.e. impacts) on jaw 3A and/or 3B from below (transversally or orthogonally on the plane P). In other words, the laser beam 6 impacts on the lower surface of the jaws.

According to an alternative and not limiting embodiment, which is not illustrated, the laser beam 6 acts (i.e. impacts) on jaw 3A and/or 3B frontally (parallel to the plane P and therefore orthogonal to the direction D illustrated in figure 2).

According to a possible (not limiting) embodiment, the monitoring system 1 is configured to detect said displacement or misalignment sequentially for a plurality of grippers 2 advancing along an advancement closed path Q (for example a closed path as illustrated in figures 1 and 2 or otherwise a not illustrated endless path); wherein the sensing unit 4 is configured to sequentially detect the displacement or misalignment of each one of the plurality of grippers 2. In other words, the sensing unit 4 is configured to detect sequentially the displacement or misalignment of at least two grippers 2, which move sequentially through the sensing unit 4, and to associate each detected displacement to the corresponding gripper 2. In particular, the control CU unit of the monitoring system 1 is configured to identify which gripper 2 is arranged (i.e. located) in correspondence of the sensing unit 4 and to associate the detected displacement to the corresponding gripper 2. In particular, the control unit CU is configured to identify the gripper 2 situated (i.e. located) in correspondence of the sensing unit 4 based on a pitch PT of the grippers 2 along the path Q and their travel speed along the path Q (which is the same for each gripper 2). Said speed can be considered also a speed through the sensing unit 4. As "pitch" is intended the distance measured between two adjacent grippers 2 which are sequentially arranged.

According to a possible, not limitative embodiment, the travel speed of the grippers 2 is received by a user-input through a user interface (not illustrated). In other words, the operator can input the travel speed by the user interface. The user interface can comprise for example (not exhaustive and limitative list) at least: a keyboard, a mouse, a joystick or a touchscreen.

According to possible alternative and not limitative embodiments, the control unit CU is configured to receive, in use, the travel speed of the grippers 2 from a controller of a packaging plant. The control unit CU is connected (by wire or wirelessly) with a controller of at least a machine of the packaging plant such to obtain from the controller at least the information concerning the travel speed of the grippers 2 (i.e. of the grippers 2 of that machine).

According to possible alternative and not limitative embodiment, the monitoring system 1 comprises in addition a presence sensor (not illustrated), which is configured for cyclically detecting the same gripper 2 to determine said speed. The travel speed can be correlated to an angular speed of a conveyor moving the grippers along the closed path Q.

The cyclically detected gripper 2 comprises a detection element which can be detected by said presence sensor. In this way the interaction with other elements which is needed by the monitoring system 1 to obtain said speed is minimized. The presence sensor can be an inductive sensor.

Advantageously, but not limitedly, the control unit CU is configured to compare the detected displacement or misalignment with a predetermined threshold value TV defining the maximal accepted displacement and to signal if the detected displacement is equal or greater than the threshold value TV. The threshold value TV can be inputted by a user through a user interface.

Advantageously, but not limitedly, the monitoring system 1 comprises an electronic device for the visual presentation (not illustrated). Preferentially, the electronic device for the visual presentation is a display. The electronic device for the visual presentation is configured to display at least one between: a real time mapping of the displacement or misalignment of the gripper 2 (or of at least one gripper 2 or of each gripper 2), the threshold value TV and a starting value corresponding to the displacement of a new mounted gripper 2. The starting value can be inputted by a user through a user interface. The starting value can be used to compare, for each gripper 2, the current displacement or misalignment with an ideal displacement or misalignment, to help the user in getting knowledge about the real level of wear.

Advantageously, but not limitedly, the monitoring system 1 comprises a support 7 on which the unit is stably mounted. The support 7 can comprise a plurality of linkages configured to adjust the position and the orientation of the monitoring system 1.

According to an additional aspect of the present invention, there is provided also a conveyor 8 for conveying containers, the conveyor 8 comprising a plurality of grippers 2, each movable along the closed path Q (for example a closed path as illustrated in figures 1 and 2 or otherwise a not illustrated endless path). The conveyor 8 comprises the monitoring system 1. For clarity reasons in figure 1 a conveyor 8 with only one gripper 2 is illustrated. It is evident from figure 3 that the conveyor 8 can comprise a plurality of gripper 2 which can be distributed along the path Q with a spatial pitch PT.

The conveyor 8 comprises a support structure on which the grippers 2 are mounted. The conveyor 8 is configured to convey the grippers 2 along the path Q and through the sensing unit 4, by means of a movement of the support structure on said plane P. The movement of the support structure can comprise a rotational component around a vertical axis which is transversal or orthogonal to the plane P.

According to the not limitative embodiment of figure 1, the support structure comprises a star wheel or carousel which is mounted rotatable around a vertical axis, which is not shown in figure 1, so as to advance each gripper 2 along the advancement path Q. In figure 1 the advancement path is circular. In figure 3, the speed of the grippers is indicated with V, and the speed V is obtained through rotation of the support structure. The rotation of the support structure is showed by the central arrow.

Advantageously, but not limitedly, as illustrated in figure 1, the conveyor 8 comprises a single monitoring system 1 for all grippers 2 of the conveyor 8. In other words, the single monitoring system 1 detects the displacement of each gripper 2 of the conveyor 8. In this case, the conveyor 8 is configured so that the sensor 5 does not follow the motion of the grippers 2 along the path Q.

According to the not limitative embodiment of figure 1, the monitoring system 1 is mounted on the support 7, which maintains the sensing unit 4 fixed with respect to a fixed frame of the machine comprising the conveyor 8. In particular, the sensing unit 4 is arranged laterally and faces (at least partially superimposed) jaws 3A and 3B of the gripper 2.

According to a not limitative alternative embodiment, which is not illustrated, the conveyor 8 comprises a plurality of monitoring systems 1 and wherein each gripper 2 has its own associated monitoring system 1. In other words, each gripper 2 has a related monitoring system 1. In this case, the conveyor 8 is configured so that each monitoring system follows or is integral with the motion of the respective gripper 2 along the path Q.

According to a further aspect of the present invention, there is provided also a packaging plant for packaging a pourable product by means of containers, comprising the monitoring system 1 and/or the conveyor 8. According of a non-limiting example, the packaging plant may comprise a forming or blowing machine for forming the containers starting from respective preforms, a filling machine for filling the containers, a labelling machine for labelling the containers, and/or a capping machine for capping the filled containers. The pourable product can be for example a carbonated liquid (such as sparkling water, soft drinks and beer), a non-carbonated liquid (such as natural water, fruit juices, wine, tea, milk, flavored water), an emulsion, a suspension, a high viscosity liquid or a drink containing a pulp and / or solid pieces. The containers can be for example bottle or cans.

The embodiments described above can be combined with each other embodiments without departing from the scope of protection of the present invention.

The monitoring system 1, as well as the conveyor 8 and/or the packaging system described above, present a plurality of advantages.

Firstly, the monitoring system 1 allows to monitor in real time and continuously the wear of each gripper 2 of the conveyor 8 or of the packaging plant.

Secondly, the monitoring system 1 allows to perform a predictive maintenance of the gripper 2 and therefore of the conveyor 8 or of the packaging plant. In other words, the monitoring system 1 allows to determine the condition of in-service gripper 2 in order to estimate when maintenance should be performed.

Therefore, the monitoring system 1 allows cost savings over routine preventive maintenance, because tasks are performed only when warranted and not at set (time) intervals.

Thirdly, the monitoring system 1 permits to univocally identify which of the many grippers 2 of the conveyor 8 has to be replaced and for which one the replacement can still be postponed. In particular, through the electronic device for the visual presentation it is possible to show a maintenance alert indicating punctually and precisely which of the gripper 2 has to be replaced.

In addition, the monitoring system 1 allows to verify in an easy way if the operator has executed the due maintenance for all grippers 2. Through the monitoring system 1 it is also possible to identify if some gripper 2 has been involved in any involuntary collision.

Furthermore, the monitoring system 1 allows to transmit the acquired measurements of the displacement to a data processing system and to store them, in order to have a historical data and to identify the gripper 2 most worn over time.

Moreover, the monitoring system 1 using a laser position sensor has a high dynamic measurement accuracy.

Finally, through the monitoring system 1 is also possible to achieve the production speed of the packaging plant.

### LIST OF REFERENCE NUMBERS OF THE FIGURES

- 1: monitoring system
- 2: gripper
- 3: jaw
- 4: sensing unit
- 5: sensor
- 6: laser beam
- 7: support
- 8: conveyor
- D: direction
- P: plane
- PT: pitch
- V: speed

## Claims

1. A monitoring system (1) for monitoring the wear of a gripper (2), the gripper being configured for retaining a container; the gripper (2) comprises two jaws (3; 3A, 3B) at least one of which is mobile on a plane (P) to arrange the gripper (2) between an open position within which the jaws (3; 3A, 3B) of the gripper (2) are spaced apart from one another for receiving or releasing the container, and a closed position within which the jaws (3; 3A, 3B) of the gripper (2) are approached to one another for retaining the container; the monitoring system (1) comprises a sensing unit (4) configured to detect a displacement or misalignment of the first jaw (3; 3A) with respect to the second jaw (3; 3B) along a direction (D) which is transversal, preferentially orthogonal, to the plane (P).

2. A monitoring system (1) according to claim 1, wherein the sensing unit (4) comprises a distance sensor (5) for detecting the relative displacement or misalignment along the direction (D) of each jaw (3; 3A, 3B).

3. A monitoring system (1) according to claim 2, wherein the distance sensor comprises a laser sensor configured to emit a laser beam (6) onto each jaw (3; 3A, 3B) to detect their relative displacement or misalignment along the direction (D).

4. A monitoring system (1) according to any one of the preceding claims, wherein the monitoring system (1) is configured to detect the displacement or misalignment sequentially for a plurality of grippers (2) advancing along a closed path (Q).

5. A monitoring system (1) according to claim 4, wherein the system (1) is configured for identifying which gripper (2) is situated in correspondence of the sensing unit (4) and to associate the detected displacement to the corresponding gripper (2).

6. A monitoring system (1) according to claim 4, wherein the system (1) is configured for identifying which gripper (2) is situated in correspondence of the sensing unit (4) and to associate the detected displacement to the corresponding gripper (2), based on a pitch of the grippers (2) along the path (Q) and their travel speed along the path (Q) .

7. A monitoring system (1) according to claim 5 or 6, wherein the system is configured for obtaining said speed by receiving an input from a user or by receiving the automatically the speed from a controller of a packaging plant.

8. A monitoring system (1) according to claim 6, comprising a presence sensor configured for cyclically detecting the same gripper (2), to determine said travel speed.

9. A monitoring system (1) according to claim 8, comprising a detection element which can be detected by said presence sensor and can be integral with the cyclically detected gripper (2).

10. A monitoring system (1) according to claim 8 or 9, wherein said presence sensor is an inductive sensor.

11. A monitoring system (1) according to any one of the preceding claims, wherein the system (1) is configured to compare the detected displacement or misalignment with a predetermined threshold value (TV) defining the maximal accepted displacement or misalignment and to signal if the detected displacement is equal or greater than the threshold value (TV).

12. A monitoring system (1) according to any one of the preceding claims, comprising an electronic device for the visual presentation, preferentially a display, configured to display at least one between: a real time mapping of the displacement of the gripper (2), the threshold value (TV) and a value corresponding to the displacement of a new mounted gripper (2).

13. A conveyor (8) for conveying containers along a closed path (Q), comprising a plurality of grippers (2), the conveyor (8) being configured to convey the grippers (2) along the closed path (Q) and comprising a monitoring system (1) according to any one of claims 1 to 12.

14. A conveyor (8) according to claim 13, wherein:
- the conveyor (8) comprises a support structure on which the grippers (2) are mounted;
- the conveyor (8) is configured to convey the grippers (2) along the path (Q) and through the sensing unit (4), by means of a movement of the support structure on said plane (P), the movement being preferably a rotation about an axis which is transversal or orthogonal to said plane (P).

15. A conveyor (8) according to claim 13 or 14, comprising a single monitoring system (1) for all grippers (2) of the conveyor (8); wherein the conveyor (8) is configured so that the sensor (5) does not follow the motion of any gripper (2) along the path (Q).

16. A conveyor (8) according to claim 13 or 14, comprising a plurality of monitoring systems (1) and wherein each gripper (2) has its own associated monitoring system (1) following the respective motion along the path (Q).

17. A packaging plant comprising the monitoring system (1) according to any one of claims 1 to 12 and/or the conveyor (8) according to any one of claims 13 to 16.
